# DEMANDE DE BREVET EUROPEEN

(11) **EP 1 830 111 A1**
(43) Date de publication de la demande: **05.09.2007**
(21) Numéro de dépôt: 07300802.1
(22) Date de dépôt: 21.02.2007
(51) Int. Cl.: F16H 61/02, F16H 59/04

(54) **Dispositif de commande pour une boîte de vitesses**

(30) Priorité: 02.03.2006 FR 0650738
(71) Demandeur: PEUGEOT CITROËN AUTOMOBILES SA, 78140 Vélizy Villacoublay (FR)
(72) Inventeur: Maurel, Stéphane Peugeot Citroën Automobiles SA, 92130, Issy les Moulineaux (FR); Ligouret, Pierre Peugeot Citroën Automobiles SA, 94350, Villiers sur Marne (FR)

(57) **Abrégé**

La présente invention concerne un dispositif de commande pour une boîte de vitesses manuelle pilotée comprenant un moyen de commande permettant de déclencher un changement vers un rapport de vitesses supérieur ou inférieur, le moyen de commande (10) étant disposé et conformé pour agir sur au moins deux actionneurs (1, 2) correspondants.

Le moyen de commande (10) est conformé pour agir sur les deux actionneurs (1, 2) à deux instants différents et le dispositif de commande comprend un moyen permettant de mesurer l'intervalle entre les deux instants afin de déclencher le changement de vitesses selon un mode de conduite en fonction de la durée de l'intervalle.

## Description

La présente invention concerne un dispositif de commande pour une boîte de vitesses manuelle pilotée ainsi qu'une boîte de vitesses manuelle pilotée comportant un tel dispositif.

Dans un véhicule automobile, l'interface homme machine associée à une boîte de vitesses manuelle pilotée, ou boîte de vitesses robotisée, est composée de pédales de frein et d'accélérateur ainsi que d'une commande de passage de vitesses, commande généralement matérialisée par un levier de vitesses complétée par une ou des manettes de commande en forme de palettes disposées au niveau du volant. Un mode automatique est généralement disponible. Dans ce mode, le passage d'une vitesse à l'autre est entièrement automatisé, le conducteur n'ayant pas besoin d'agir sur le levier de vitesses ni sur l'une des commandes.

La présente invention concerne un dispositif de commande pour une boîte de vitesses manuelle pilotée où le conducteur d'un véhicule automobile équipé d'une telle boîte de vitesses demande lui-même le passage des vitesses par une action sur la commande de passages de vitesses.

Sur des boîtes de vitesses manuelles pilotées traditionnelles, le passage d'une vitesse à une autre est déclenché par un actionneur intégré dans le levier de vitesse ou situé sur une palette. Le signal électrique ainsi engendré par l'actionneur déclenche alors la procédure de passage de vitesses.

Certaines boîtes de vitesses manuelles pilotées comprennent en outre la possibilité pour le conducteur de déterminer le mode de passage de vitesses, à savoir un passage de type sport ou un passage de type confort. Toutefois, cette sélection doit être faite par le conducteur en début de la conduite. Autrement dit, la boîte de vitesses manuellement pilotée doit être préréglée pour l'un ou l'autre des deux modes de passage des vitesses évoqués.

Pour certains modèles de boîtes de vitesses manuelles pilotées, une analyse de la volonté du conducteur de faire passer les vitesses en mode sport ou en mode confort se fait à partir de la détection d'un signal de position engendré par la pédale d'accélérateur.

Le but de l'invention est de proposer un dispositif de commande pour une boîte de vitesses manuelle pilotée qui permette au conducteur de sélectionner le mode de passage des vitesses à chaque passage des vitesses.
Le but de l'invention est atteint avec un dispositif de commande pour une boîte de vitesses manuelle pilotée comprenant un moyen de commande permettant de déclencher un changement vers un rapport de vitesses supérieur ou inférieur, le moyen de commande étant conformé pour agir sur au moins deux actionneurs correspondants à deux instants différents.
Le dispositif de commande comprend en outre un moyen permettant de mesurer l'intervalle entre les deux instants, afin de déclencher le changement de vitesses suivant un mode de conduite fonction de la durée de l'intervalle. La durée de l'intervalle est comparée à un ou plusieurs seuils, et le changement de vitesses est déclenché suivant que l'intervalle est inférieur ou supérieur auxdits seuils.
Le dispositif de l'invention permet ainsi au conducteur de sélectionner automatiquement le mode de passage des vitesses, en fonction du mode conduite désiré, confort ou sportif, avec éventuellement un ou plusieurs modes intermédiaires et ce, à chaque passage des vitesses sans qu'une manipulation préalable d'un quelconque organe ni un geste supplémentaire ne soient nécessaires.

En effet, l'invention exploite le phénomène selon lequel, lorsqu'un conducteur conduit d'une manière sportive, il manipule les commandes plus rapidement afin de changer les vitesses plus rapidement que quelqu'un qui conduit d'une manière plus tranquille et qui veille d'avantage à son confort. Les compromis résumés sous le vocable "mode sportif" et sous celui de "mode confort" englobent une intervention aussi bien sur l'embrayage et la boîte de vitesses que sur la commande du moteur. Ainsi, lors d'un changement de vitesses en mode confort, le désembrayage et le ré-embrayage doivent être doux et le passage d'une vitesse à l'autre peut durer un certain temps. Contrairement à cela, lors d'un changement de vitesses en mode sportivité, le désembrayage et le ré-embrayage doivent être rapides, quasiment instantanés, et le passage d'une vitesse à une autre doit durer le moins de temps possible.

Le dispositif de commande selon l'invention exploite donc la vitesse avec laquelle un conducteur manipule les commandes de la boîte de vitesses, ici en l'occurrence la vitesse avec laquelle le moyen de commande est mu et engendre successivement via les deux actionneurs, une première impulsion et une seconde impulsion. Selon cette disposition, la première impulsion informe la commande du moteur de la volonté du conducteur de passer une vitesse et la seconde impulsion informe, par le temps qui la sépare de la première impulsion, la commande de la boîte de vitesses du mode sportif ou confort désiré par le conducteur.

Le dispositif de commande de l'invention peut être réalisé essentiellement mais non exclusivement de deux façons. Selon la première, le moyen de commande comprend deux bras transversaux dont les faces destinées à venir en contact avec les deux actionneurs, sont disposées sur des plans différents tandis que les deux actionneurs sont montés sur un même plan. Et selon la seconde façon, le moyen de commande comprend un ou deux bras transversaux dont les faces destinées à venir en contact avec les deux actionneurs sont situées sur un même plan tandis que les actionneurs sont montés sur des plans différents.

Pour simplifier la présente description de l'invention, les deux actionneurs sur lesquels agit le moyen de commande, sont représentés et considérés comme des éléments identiques en ce qui concerne leurs dimensions et leurs caractéristiques électriques.

Selon le mode de réalisation de l'invention choisie, le dispositif de commande de l'invention peut avoir l'une au moins des caractéristiques ci-après considérées isolément ou selon toutes combinaisons techniquement possibles:
- le moyen de commande comporte un axe pourvu d'au moins un bras transversal, le (ou les) bras étant conformé(s) pour agir sur les deux actionneurs lors d'un même déplacement axial du poussoir ;
- les deux actionneurs sont disposés sur un même plan;
- le moyen de commande comporte un bras unique s'étendant sur les deux actionneurs ; le bras est pourvu d'une partie proéminente permettant d'agir sur un des deux actionneurs plus tôt que sur l'autre ;
- le moyen de commande comporte deux bras axialement décalés de façon à agir sur un des deux actionneurs plus tôt que sur l'autre ;
- le moyen de commande comporte un bras transversal unique et sans proéminence et les deux actionneurs sont disposés sur deux plans différents afin que le bras transversal agisse sur un des deux actionneurs plus tôt que sur l'autre.

Le but de l'invention est également atteint avec une boîte de vitesses manuelle pilotée pour un véhicule automobile, comprenant un dispositif de commande tel que décrit plus haut.

D'autres caractéristiques et avantages de la présente invention ressortiront de la description ci-après d'un mode de réalisation de l'invention, la description étant faite en référence aux dessins annexés dans lesquels:
- la figure 1 représente, la disposition de deux actionneurs et un moyen de commande conformé pour agir simultanément sur les deux actionneurs,
- la figure 2 représente la configuration de la figure 1 avec action sur le moyen de commande,
- la figure 3 représente une configuration selon l'invention avec un moyen de commande du dispositif de l'invention conformé pour agir sur les deux actionneurs à des instants différents,
- la figure 4 représente la configuration de la figure 3 au début de l'action sur un premier actionneur,
- la figure 5 représente l'action retardée sur le second actionneur et
- la figure 6 représente une variante de réalisation du dispositif selon la configuration de la figure 3.

Sur ces figures, le moyen de commande, est identifié à un poussoir. Le moyen de commande est par exemple une palette, non représentée, qui est associée au poussoir. C'est donc le poussoir seul qui sera considéré dans la description qui suit.

Pour simplifier la description, on ne considèrera que deux modes de conduite : un mode sportif et un mode confort.

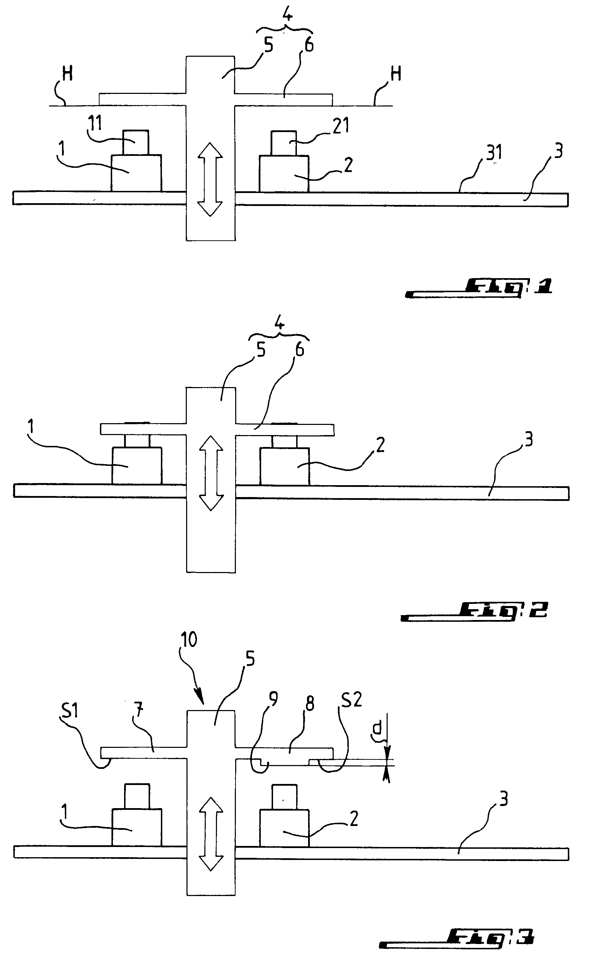

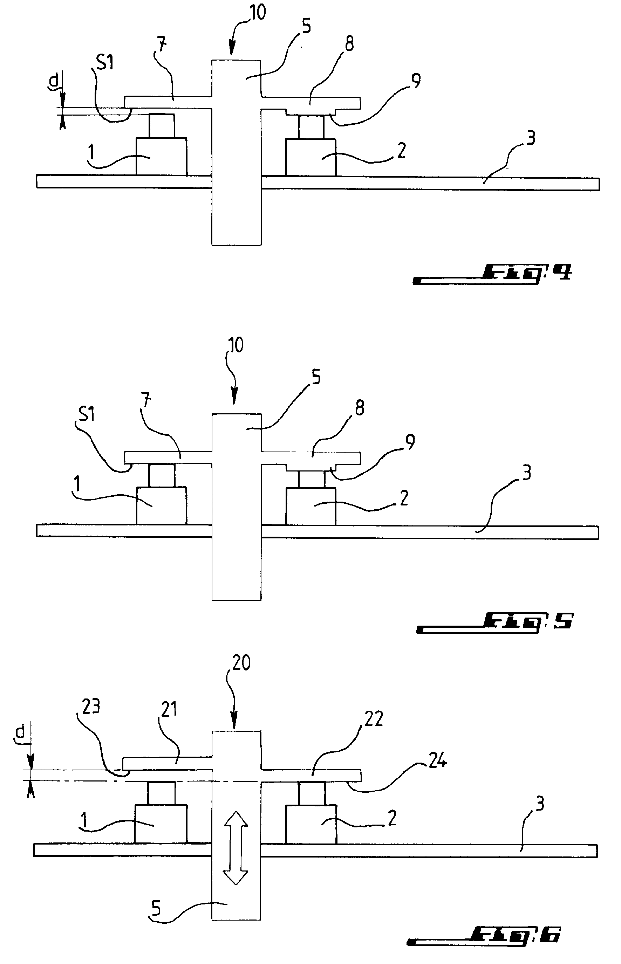

La figure 1 représente, deux actionneurs, par exemple des micro-contacts 1, 2, montés sur un support 3 ainsi qu'un poussoir 4 avec un axe 5 et un bras transversal 6 pour agir sur les micro-contacts 1, 2, selon une utilisation traditionnelle. En effet, pour des raisons de sécurité de fonctionnement et de redondance, deux microcontacts 1, 2 montés en parallèle sont utilisés pour engendrer un signal électrique qui est envoyé vers un moyen de commande de la boîte de vitesses pour effectuer un changement de rapport de vitesses. Un dispositif de commande pour une boîte de vitesses manuelle pilotée comprend généralement deux paires de micro-contacts et deux poussoirs dont un poussoir, ou toute autre forme de contacteurs appropriés, est dédié au déclenchement d'un changement de vitesses vers un rapport de vitesses inférieur et dont l'autre est dédié au déclenchement d'un changement de vitesses vers un rapport de vitesses supérieur. Selon la configuration du poussoir 4 sur les figures 1 et 2, le bras transversal 6, avec ses deux demi-bras droit et gauche représentés sur les dessins, est formé de manière à présenter une face de contact S sur un même plan H destinée à venir en appui sur les parties mobiles 11, 21 des deux microcontacts 1, 2.

De ce fait, lorsque le poussoir 4 est déplacé axialement vers les micro-contacts 1, 2, le bras transversal 6 atteint les parties mobiles 11, 21 des deux micro-contacts 1, 2 simultanément, les enfonce simultanément et ferme les contacts des deux micro-contacts 1, 2 simultanément.

Abstraction est faite ici bien sûr de différences extrêmement minimales résultant de tolérances de fabrication des micro-contacts.

Pour le dispositif de commande de l'invention (figure 3), deux micro-contacts 1, 2 dont l'identité des numéros de référence avec ceux des microcontacts de la configuration selon les figures 1 et 2 doit souligner l'identité des contacts en tant que composants, sont montés sur un support 3 comme avant l'invention.

Cependant, le poussoir 10 diffère en un point essentiel du poussoir 4 de la configuration traditionnelle. En effet, le poussoir 10 comprend un axe 5 pourvu d'un bras transversal ayant une première partie latérale 7 avec une face de contact S1 orientée vers le microcontact 1 et une seconde partie latérale 8 avec une face de contact S2 orientée vers le micro-contact 2 et comportant une partie proéminente 9. La partie proéminente 9 a une hauteur d par rapport à la face S2 de la partie latérale 8 du bras transversal.

Les figures 4 et 5 montrent le poussoir 10 à deux étapes différentes de son actionnement. Sur la figure 4, le poussoir 10 est avancé jusqu'à une première position dans laquelle la partie 8 du bras transversal, par sa partie proéminente 9, vient de prendre appui sur la partie mobile du microcontact 2 alors que la face de contact S1 de la partie 7 du bras transversal est encore à une distance d de la partie mobile du micro-contact 1. Sur la figure 5, le poussoir 10 est avancé vers le support 3 jusqu'à une seconde position où il prend également appui sur la partie mobile du micro-contact 1. A partir de ce moment, le contacteur appuie simultanément sur les deux micro-contacts 1, 2. Toutefois, en raison de l'avance prise par la partie 8 du bras transversal et sa partie proéminente 9, le micro-contact 2 est fermé en premier et envoie une première impulsion et c'est ensuite seulement que le micro-contact 1 est fermé et envoie une seconde impulsion.

L'intervalle de temps entre les deux moments où respectivement le microcontact 2, puis le microcontact 1 sont fermés, est mesuré. Lorsque cet intervalle de temps est inférieur à un seuil prédéterminé, cela correspond à une vitesse d'actionnement supérieure à un seuil de vitesse de commande défini, ce qui déclenche un changement de vitesse en mode sportif de la boîte de vitesses manuelle pilotée.

Lorsque, au contraire, l'intervalle de temps entre les deux moments où les contacts dans les micro-contacts 2 puis 1 sont fermés, est supérieur au seuil prédéterminé, cela signifie que le conducteur du véhicule a actionné la palette lentement, veillant au confort de conduite, et l'électronique de commande déclenche un changement de vitesses en mode confort.

La figure 6 représente une variante du mode de réalisation du dispositif de commande selon l'invention. Le dispositif de commande comprend, comme dans le mode de réalisation représenté sur les figures 3 à 5, deux micro-contacts 1 et 2 montés à un même niveau sur un support 3 et un poussoir 20 comportant un axe 5 pour le déplacement axial du poussoir dans un sens axial ou dans l'autre, c'est-à-dire vers les deux micro-contacts 1, 2 ou en retour d'elles. L'axe 5 est pourvu de deux bras transversaux 21, 22 ayant chacun une face de contact 23, 24 orientée respectivement vers l'un et vers l'autre des micro-contacts 1, 2. La face de contact 23 du bras latéral 21 est disposée à un niveau différent de celui auquel est disposée la face de contact 24 du bras latéral 22. La différence d entre les deux niveaux des faces de contact est la même que celle entre la partie proéminente 9 de la partie 8 et celle de la partie 7 du poussoir 10 représenté sur les figures 3 à 5. L'actionnement du poussoir 20 produit donc le même effet que celui du poussoir 10, c'est-à-dire le micro-contact 2 est fermé en premier et engendre une première impulsion pour le déclenchement d'un changement de vitesses, et ensuite le micro-contact 1 est fermé et engendre une seconde impulsion qui permet, par le temps qui la sépare de la première impulsion, de déterminer le mode de changement de vitesses souhaité par le conducteur.

A partir de la figure 6, il est aisé de s'imaginer que selon une autre variante, il est possible de concevoir un poussoir ayant la même forme que le poussoir 4 représenté sur les figures 1 et 2, c'est-à-dire un poussoir avec un bras transversal dont les deux parties latérales présentent des faces de contact à hauteur égale. Dans ce cas, pour obtenir une fermeture de contact différentiée entre les deux micro-contacts, l'un d'entre eux est alors monté à un niveau différent de celui de l'autre micro-contact ou, lorsque ceci ne peut être réalisé, on utilise des micro-contacts dont la hauteur des parties mobiles en état non actionné est différente. Afin que le bras transversal vienne d'abord en contact avec le micro-contact 2, il faut alors que la partie mobile de la palette 1 soit plus courte que celle de la palette de contacts 2.

Il est également possible de concevoir, sans sortir du cadre de la présente invention, qu'au moins l'un des actionneurs est disposé sur un plan différent de l'autre, les deux bras transversaux étant sur le même plan, ou toute autre combinaison permettant d'obtenir des instants différents.

Il est également possible d'utiliser des actionneurs ayant des caractéristiques géométriques distinctes (partie mobile de l'un des actionneurs plus haute ou plus basse que l'autre) ou des caractéristiques électriques distinctes (instants de déclenchement différents).

Dans un tel cas, les différences de niveau des bras ne sont plus nécessaires mais peuvent être néanmoins combinées avec un ou l'autre de tels actionneurs.

Des conceptions analogues sont à prévoir lorsque les micro-contacts 1 et 2 ne fonctionnent pas en fermeture mais en ouverture.

## Revendications

1. Dispositif de commande pour une boîte de vitesses manuelle pilotée comprenant un moyen de commande permettant de déclencher un changement vers un rapport de vitesses supérieur ou inférieur, le moyen de commande étant disposé et conformé pour agir au moins sur deux actionneurs (1, 2) correspondants,
**caractérisé en ce que** le moyen de commande (10) est conformé pour agir sur les deux actionneurs (1, 2) à deux instants différents et **en ce que** le dispositif de commande comprend en outre un moyen permettant de mesurer l'intervalle entre les deux instants afin de déclencher le changement de vitesses suivant un mode de conduite en fonction de la durée de l'intervalle.

2. Dispositif de commande selon la revendication 1, **caractérisé en ce que** la durée de l'intervalle est comparée à un ou plusieurs seuils, et **en ce que** le changement de vitesses est déclenché suivant que l'intervalle est inférieur ou supérieur auxdits seuils.

3. Dispositif de commande selon la revendication 1 ou 2, **caractérisé en ce que** le moyen de commande (10) comporte un axe (5) pourvu d'au moins un bras transversal (7, 8), le (ou les) bras (7, 8) étant conformé (s) pour agir sur les deux actionneurs (1, 2) lors d'un même déplacement axial du moyen de commande (10).

4. Dispositif de commande selon la revendication 1, 2 ou 3, **caractérisé en ce que** les deux actionneurs (1, 2) sont disposés sur un même plan (H).

5. Dispositif de commande selon la revendication 4, **caractérisé en ce que** le moyen de commande (10) comporte un bras unique (7, 8) s'étendant en regard des deux actionneurs (1, 2) et pourvu d'une partie proéminente (9) permettant d'agir sur un (2) des deux actionneurs (1, 2) plus tôt que sur l'autre (1).

6. Dispositif de commande selon la revendication 4, **caractérisé en ce que** le moyen de commande (10) comporte deux bras (21, 22) axialement décalés de façon à agir sur un (2) des deux actionneurs (1, 2) plus tôt que sur l'autre (1).

7. Dispositif de commande selon la revendication 1, 2 ou 3, **caractérisé en ce que** les deux actionneurs (1, 2) sont disposés sur des plans différents de façon à ce que le ou les bras (7, 8) agissent plus tôt sur l'un des deux actionneurs (1, 2).

8. Dispositif de commande selon la revendication 1, 2 ou 3, **caractérisé en ce que** les deux actionneurs (1, 2) ont des caractéristiques différentes de façon à ce que le (ou les) bras (7, 8) agisse plus tôt sur l'un des deux actionneurs (1, 2).

9. Boîte de vitesses manuelle pilotée pour un véhicule automobile, **caractérisé en ce qu'**elle comprend un dispositif de commande selon l'une quelconque des revendications 1 à 8.
